# EUROPEAN PATENT APPLICATION

(11) **EP 3 715 106 A1**
(43) Date of publication of application: **30.09.2020**
(21) Application number: 18882167.2
(22) Date of filing: 21.11.2018
(51) Int. Cl.: B32B 7/025, A61J 1/00, A61J 1/10, B32B 15/04, B32B 27/00, B65D 1/00, G01M 3/40, G01N 27/20, G01N 27/24, G01N 27/92, H01R 4/24

(54) **COMPOSITE MATERIAL, PACKAGING CONTAINER, TERMINAL, AND COMPOSITE MATERIAL INSPECTION METHOD**

(30) Priority: 22.11.2017 JP 2017224236
(71) Applicant: Takeda Pharmaceutical Company Limited, Osaka-shi, Osaka 541-0045 (JP)
(72) Inventor: OTSUBO Toshihiko, Fujisawa-shi, Kanagawa 251-0012 (JP); KAMINAGAYOSHI Takashi, Fujisawa-shi, Kanagawa 251-0012 (JP); MORITAKE Tetsuya, Fujisawa-shi, Kanagawa 251-0012 (JP); TSUJI Shinji, Fujisawa-shi, Kanagawa 251-0012 (JP)
(74) Representative: Huenges, Martin
(86) International application number: PCT/JP2018/042985
(87) International publication number: WO 2019/103038

(57) **Abstract**

There are provided a composite material, a packaging container, and a composite material inspection method, which have a high degree of freedom in a place where the inspection is performed. The packaging container 10 includes a medicine storage space forming portion 16. The medicine storage space forming portion 16 has two first parts 20 and two second parts 22. The first part 20 and the second part 22 are formed of the same material. The material is a composite material 30 described below. The composite material 30 includes one covering portion 40, one conductive layer 42, one insulating layer 44, another insulating layer 46, another conductive layer 48, another covering portion 50, and a short-circuit preventing portion 52.

## Description

### TECHNICAL FIELD

The present invention relates to a composite material, a packaging container, a terminal, and a composite material inspection method.

### BACKGROUND ART

Single-use technology has greatly developed in proportion to the development of the biotechnology industry. "Single use" means that disposable items are used. Various products for single use have been produced according to various bioprocesses.

Pinholes are easily generated in products used for single use due to various causes that exist in purchasing, transportation, and merchandise management. Some say that an occurrence rate of an initial failure due to presence of pinholes at the time of delivery is about 4%.

At present, a pressure decay method is used as a main pinhole inspection method for products used for single use. However, the pressure decay method has a problem that the inspection requires a long time. Further, the pressure decay method has a problem that the apparatus cost is high. Furthermore, the diameter of a pinhole detectable by the pressure decay method is only 30 µm or more. On the other hand, it is said that it is necessary to detect a pinhole of 0.5 µm or more in order to guarantee the sterility inside the product. Therefore, a simple pinhole inspection method capable of detecting a smaller pinhole is demanded.

Patent Documents 1 to 7 disclose inventions relating to a new pinhole inspection method or inventions related thereto.

Patent Document 1 discloses a pinhole defect inspection method for a food packaging sheet. This food packaging sheet is obtained by laminating resin layers with a conductive layer interposed there between. In this pinhole defect inspection method, a ground electrode is brought into contact with a conductive layer exposed to a sheet end face, and a voltage is applied between the ground electrodfe and a detection electrode in contact with or close to the sheet surface to detect the presence or absence of a discharge current. According to the pinhole defect inspection method disclosed in Patent Document 1, the pinhole defect inspection of a food sealed container using a food packaging sheet having a laminated structure sandwiching a metal foil can be performed efficiently and with high reliability.

Patent Document 2 discloses a detector. This detector detects a pinhole in a partition wall of a non-conductive resin-made multi-chamber container described below. The multi-chamber container is flexible including at least two chambers described below and a partition wall described below. The chamber contains a conductive fluid. The partition wall is disposed between adjacent chambers. The detector includes at least two electrodes and at least one DC power supply and an ammeter connected to each electrode. Each electrode comes into contact with an outer wall of each chamber. This detector detects a pinhole in a partition wall based on a current value described below. The current value is detected by an ammeter when a voltage is instantaneously applied to the electrodes from the DC power supply after each electrode contacts the outer wall of each chamber. According to the detector disclosed in Patent Document 2, detection accuracy can be improved. According to the detector disclosed in Patent Document 2, even when the diameter (opening width) of the pinhole is smaller than 50 µm, the pinhole can be accurately and quickly detected. As a result, if the diameter of the pinhole is at least 20 µm, the pinhole can be detected.

Patent Document 3 discloses a pinhole inspection device. This pinhole inspection device inspects the presence or absence of a pinhole in a film portion of an inspection object described below. The inspection object is obtained by covering a conductive content with an electrically insulating coating. This pinhole inspection device includes a plurality of electrodes and a voltage application unit. The electrode is in contact with the covering portion of the inspection object. The voltage application unit applies a voltage to the film portion of the inspection object using the plurality of electrodes. The pinhole inspection device is characterized in that an AC voltage or an impulse-like output voltage is applied to a film portion of an inspection object by using a piezoelectric transformer as the voltage application unit. According to the pinhole inspection device disclosed in Patent Document 3, the presence or absence of a pinhole in an inspection object can be detected with high accuracy, and damage to the inspection object due to discharge can be prevented.

Patent Document 4 discloses a pinhole inspection method for a food sealed packaging container. This food sealed packaging container is formed by molding a sheet described below. The sheet is obtained by laminating resin layers with a conductive layer such as an aluminum metal foil interposed therebetween. This pinhole inspection method detects the presence or absence of a discharge current by bringing a ground electrode into contact with a conductive layer such as an aluminum metal foil of a food sealed packaging container, and applying a voltage between the ground electrode and a detection electrode in contact with or close to the container surface. According to the pinhole inspection method disclosed in Patent Document 4, the presence or absence of a pinhole can be detected efficiently and with high accuracy.

Patent Document 5 discloses a pinhole detection method. This pinhole detection method is a method of detecting the presence or absence of a pinhole of an insulating member to be detected by bringing an electrode close to or into contact with the member to be detected and applying a high voltage thereto to detect the presence or absence of a discharge current. In this pinhole detection method, at least when a high voltage is applied, a portion of the member to be detected facing the electrode is cooled. According to the pinhole detection method disclosed in Patent Document 5, even when the packaging member is formed of a material having no heat resistance, the pinhole can be detected with a high applied voltage.

Patent Document 6 discloses a through-hole inspection method in a ceramic sheet. This through-hole inspection method is a method of inspecting a through hole of an insulating ceramic sheet. This through-hole inspection method is a method of inspecting the presence or absence of a through hole having a minimum length of 2 angstrom or more in the ceramic sheet by sandwiching both sides of the sheet between two electrode plates arranged in parallel and detecting a discharge current generated when a high DC voltage is applied between the electrode plates. According to the through-hole inspection method disclosed in Patent Document 6, the presence or absence of a through hole in a dense ceramic sheet can be detected easily and accurately in an industrial production line in a short time.

Patent Document 7 discloses an inspection device for a semiconductor device. This inspection device includes a large number of needles, a conductive short-circuit piece, a power supply, a switch, and an elevating mechanism. The needles individually contact a large number of patterns wired on the insulating film. The short-circuit piece collectively contacts a large number of patterns at a position close to the needle. The power supply is connected between the needle and the short-circuit piece, and applies a high voltage between the two. The switch switches and connects the needle to the short-circuit piece or to a measuring instrument. The elevating mechanism separates the short-circuit pieces from the large number of patterns when the needle and the measuring instrument are connected. According to the inspection device disclosed in Patent Document 7, even if the output side pattern becomes thin and the contact pressure of the needle becomes weak, the oxide film on the output side pattern surface is removed, and the needle and the output side pattern are surely in contact with each other.

### PRIOR ART DOCUMENTS

### PATENT DOCUMENTS

Patent Document 1: Japanese Patent Application Laid-open No. H08-240569
Patent Document 2: Japanese Patent Application Laid-open No. 2005-331469
Patent Document 3: Japanese Patent Application Laid-open No. H10-300727
Patent Document 4: Japanese Patent Application Laid-open No. 2004-69458
Patent Document 5: Japanese Patent Publication No. H07-117530
Patent Document 6: Japanese Patent Application Laid-open No. 2002-90346
Patent Document 7: Japanese Utility Model Registration No. 2534091

### SUMMARY OF THE INVENTION

### PROBLEMS TO BE SOLVED BY THE INVENTION

However, the inventions disclosed in Patent Documents 1 to 7 have a problem in that an object to be inspected must be carried to a place where the device according to those inventions is installed. Having to carry the object to be inspected adds to the complexity of the inspection as compared to when it is not necessary to do so.

The present invention has been made to solve such a problem. An object of the present invention is to provide a composite material, a packaging container, a terminal, and a composite material inspection method, which have a high degree of freedom in a place where an inspection regarding the presence or absence of a pinhole is performed.

### SOLUTIONS TO THE PROBLEMS

The present inventors have conducted intensive studies on the above-described problems, and as a result, found out that whether or not the composite material to be inspected has a pair of conductive layers has a great influence on the degree of freedom in the place where the inspection regarding the presence or absence of a pinhole is performed, and completed the present invention. That is, the present invention is as follows.

The first invention is
a composite material, including:
an insulating layer using an insulator as a material;
a pair of conductive layers sandwiching the insulating layer and each having a smaller electrical resistance than the insulator;
one covering portion having at least one of a film having a higher electrical resistance than the conductive layer, and a layer using at least one of a synthetic resin, an elastomer, a fiber, a sizing agent, a wax, and a metal oxide as a material and having a larger electrical resistance than the conductive layer, the one covering portion covering one of the pair of conductive layers; and
another covering portion having at least one of a film having a higher electrical resistance than the conductive layer, and a layer using at least one of a synthetic resin, an elastomer, a fiber, a sizing agent, a wax, and a metal oxide as a material and having a larger electrical resistance than the conductive layer, the other covering portion covering the other of the pair of conductive layers.

In the second invention, in addition to the configuration of the first invention,
the composite material further includes a short-circuit preventing portion disposed at an edge of the pair of conductive layers and preventing a short circuit in the pair of conductive layers.

In the third invention, in addition to the configuration of the second invention,
the short-circuit preventing portion has an enclosing area that encloses an outer edge of the conductive layer and has a larger electrical resistance than the conductive layer.

In the fourth invention, in addition to the configuration of the third invention,
the enclosing area contains a substance that is a compound of a compound constituent that is any of components of the conductive layer and a substance different from the compound constituent, and has a larger electrical resistance than the conductive layer.

The fifth invention is a packaging container using the composite material according to the first invention as a material.

In the sixth invention, in addition to the configuration of the fifth invention,
the packaging container includes a medicine storage space forming portion that uses the composite material as a material and forms a space for storing a medicine.

The seventh invention is a terminal, including
a base; and
a plurality of projection bodies projecting from the base, in which
tips of the plurality of projection bodies are arranged along a predetermined plane.

The eighth invention further includes, in addition to the configuration of the seventh invention,
an opposing base disposed to oppose the base; and
a plurality of opposing projection bodies projecting from the opposing base toward the base, in which
tips of the plurality of opposing projection bodies are arranged along a plane parallel to the predetermined plane.

The ninth invention further includes, in addition to the configuration of the seventh invention,
a plurality of backside projection bodies projecting from an area corresponding to a back side when viewed from an area where the plurality of projection bodies project in the base, in which
tips of the plurality of backside projection bodies are arranged along a plane different from the predetermined plane.

The tenth invention further includes, in addition to the configuration of the ninth invention,
an opposing base disposed to oppose an area where the plurality of projection bodies project in the base;
a plurality of opposing projection bodies projecting from the opposing base toward an area where the plurality of projection bodies project in the base;
a backside opposing base disposed to oppose an area corresponding to a back side when viewed from an area where the plurality of projection bodies project in the base; and
a plurality of backside opposing projection bodies projecting from the backside opposing base toward an area corresponding to a back side when viewed from an area where the plurality of projection bodies project in the base.

The eleventh invention is
a composite material inspection method, including:
a terminal contact step of bringing one of a pair of terminals for applying a voltage into electrical contact with one of a pair of conductive layers of a composite material, and bringing the other of the pair of terminals into electrical contact with the other of the pair of conductive layers, the composite material including an insulating layer using an insulator as a material, a pair of conductive layers sandwiching the insulating layer and each having a smaller electrical resistance than the insulator, one covering portion having at least one of a film having a higher electrical resistance than the conductive layer, and a layer using at least one of a synthetic resin, an elastomer, a fiber, a sizing agent, a wax, and a metal oxide as a material and having a larger electrical resistance than the conductive layer, the one covering portion covering one of the pair of conductive layers, and another covering portion having at least one of a film having a higher electrical resistance than the conductive layer, and a layer using at least one of a synthetic resin, an elastomer, a fiber, a sizing agent, a wax, and a metal oxide as a material and having a larger electrical resistance than the conductive layer, the other covering portion covering the other of the pair of conductive layers;
a voltage application step of applying a voltage between the pair of conductive layers through the pair of terminals; and
a pinhole detection step of detecting the presence or absence of a pinhole in the composite material according to whether or not a result of applying the voltage in the voltage application step satisfies a predetermined requirement.

The twelfth invention includes, in addition to the configuration of the eleventh invention,
one terminal contact step of bringing one of the pair of terminals into electrical contact with one of the pair of conductive layers in a state of being electrically insulated from the other of the pair of conductive layers, and
another terminal contact step of bringing the other of the pair of terminals into electrical contact with the other of the pair of conductive layers in a state of being electrically insulated from one of the pair of conductive layers.

In the thirteenth invention, in addition to the configuration of the twelfth invention,
the other terminal contact step includes a step of bringing the other of the pair of terminals into electrical contact with the other of the pair of conductive layers such that the other of the pair of terminals opposes one of the pair of terminals via the pair of conductive layers and the insulating layer.

In the fourteenth invention, in addition to the configuration of the twelfth invention,
the terminal has a plurality of projection bodies arranged to uniformly contact the conductive layer.

In the fifteenth invention, in addition to the configuration of the eleventh invention,
the pinhole detection step includes:
an impedance measurement step of measuring an impedance of the insulating layer with respect to the voltage applied in the voltage application step; and
a presence/absence determination step of determining presence or absence of the pinhole according to whether or not the impedance measured in the impedance measurement step is below a threshold.

The sixteenth invention includes, in addition to the configuration of the eleventh invention,
another material contact step of bringing a pair of terminals into electrical contact with the pair of conductive layers of another composite material having the same structure as the composite material;
another material voltage application step of applying a voltage to the pair of conductive layers of the other composite material; and
another material pinhole detection step of detecting presence or absence of a pinhole in the other composite material according to whether or not a result of applying the voltage in the other material voltage application step satisfies a predetermined requirement, in which
one of the pair of terminals in the other material contact step is in electrical contact with one of the pair of conductive layers of the other composite material,
the other of the pair of terminals in the other material contact step is in electrical contact with the other of the pair of conductive layers of the other composite material,
the one of the pair of terminals in the other material contact step also serves as one of the pair of terminals in the terminal contact step,
the other of the pair of terminals in the other material contact step is a terminal different from the other of the pair of terminals in the terminal contact step, and
in the other material voltage application step, a voltage is applied to the pair of conductive layers via the pair of terminals in the other material contact step.

### EFFECTS OF THE INVENTION

According to the present invention, it is possible to provide a composite material, a packaging container, a terminal, and a composite material inspection method, which have a high degree of freedom in a place where an inspection regarding the presence or absence of a pinhole is performed.

### BRIEF DESCRIPTION OF THE DRAWINGS

Fig. 1 is a conceptual diagram showing an example of use of a packaging container according to a first embodiment of the present invention.
Fig. 2 is a conceptual diagram showing a configuration of the packaging container according to the first embodiment of the present invention.
Fig. 3 is a cross-sectional view of a composite material according to the first embodiment of the present invention.
Fig. 4 is a cross-sectional view of a composite material according to a modification of the first embodiment of the present invention.
Fig. 5 is a flowchart showing steps of a composite material inspection method according to the first embodiment of the present invention.
Fig. 6 is a conceptual diagram showing a structure of a terminal according to the first embodiment of the present invention and a use state thereof.
Fig. 7 is a conceptual diagram showing a structure of a pair of terminals according to a second embodiment of the present invention and a use state thereof.
Fig. 8 is a conceptual diagram showing a structure of a pair of terminals according to a third embodiment of the present invention and a use state thereof.
Fig. 9 is a conceptual diagram showing a situation where a composite material inspection method according to a fourth embodiment of the present invention is being simultaneously performed on two composite materials.
Fig. 10 is a flowchart showing an example of steps when the composite material inspection method according to the fourth embodiment of the present invention is performed on two composite materials.
Fig. 11 is a conceptual diagram showing a structure of a simultaneous measurement terminal according to a first modification of the fourth embodiment of the present invention.
Fig. 12 is a conceptual diagram showing a structure of a pair of terminals according to a second modification of the fourth embodiment of the present invention.

### EMBODIMENTS OF THE INVENTION

Hereinafter, embodiments of the present invention will be described with reference to the drawings. In the following description, the same components are denoted by the same reference numerals. Their names and functions are also the same. Therefore, detailed description thereof will not be repeated.

### [Description of packaging container]

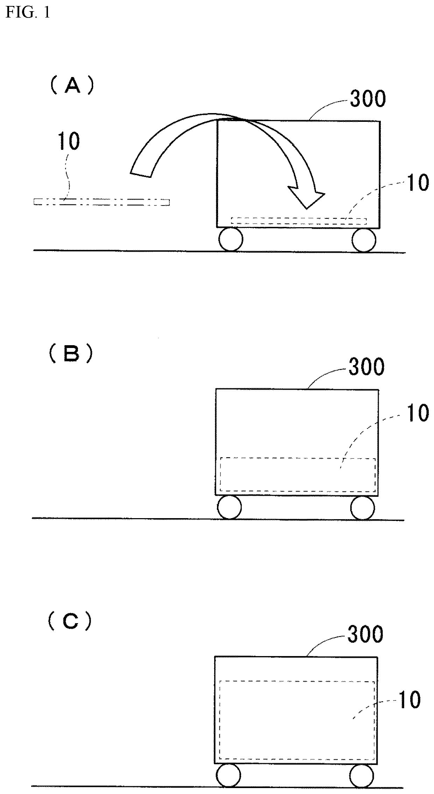

A packaging container 10 according to the present embodiment is used, for example, for storing a medicine, specifically, for storing a medicine as a single-use bag used when manufacturing a medicine such as an antibody or a vaccine. Fig. 1 is a conceptual diagram showing an example of use of the packaging container 10 according to the present embodiment. As shown in Fig. 1(A), this packaging container 10 is housed in a trolley 300 prior to its use. Liquid medicine is supplied to the packaging container 10 housed in the trolley 300 via a tube (not shown). Along with the supply of the medicine, the packaging container 10 expands as shown in Fig. 1(B). Fig. 1(C) shows the packaging container 10 and the trolley 300 at the time when the supply of the medicine has been completed.

### [Description of configuration of packaging container]

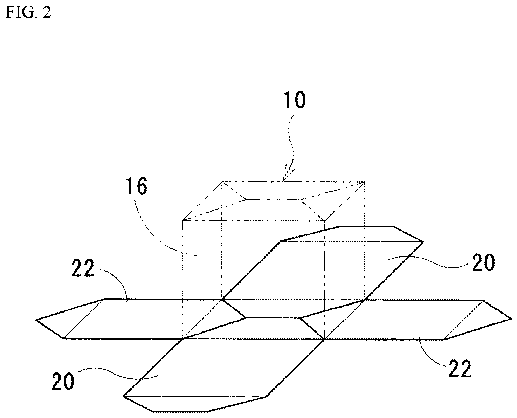

Fig. 2 shows a configuration of the packaging container 10 according to the present embodiment. The packaging container 10 according to the present embodiment includes a medicine storage space forming portion 16. The medicine storage space forming portion 16 forms a space for the packaging container 10 according to the present embodiment to store a medicine. The medicine storage space forming portion 16 according to the present embodiment has two first parts 20 and two second parts 22. By joining the first parts 20 and the second parts 22 to each other, the medicine storage space forming portion 16 according to the present embodiment, and eventually, the packaging container 10 according to the present embodiment is formed.

### [Description of configuration of composite material]

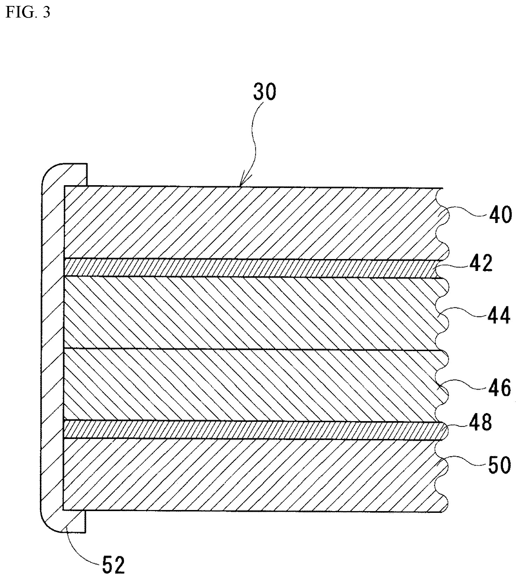

In the present embodiment, the first part 20 and the second part 22 are formed of the same material. The material is a composite material 30 described below. Fig. 3 is a cross-sectional view of the composite material 30 according to the present embodiment. In the present embodiment, the form of the composite material 30 is a sheet. The size, thickness, and mechanical properties of the composite material 30 according to the present embodiment are not particularly limited, but the thickness is preferably, for example, 30 µm or more and 300 µm or less, and a mechanical strength is preferably at such a level to allow the material to be easily bent. The composite material 30 according to the present embodiment includes one covering portion 40, one conductive layer 42, one insulating layer 44, another insulating layer 46, another conductive layer 48, another covering portion 50, and a short-circuit preventing portion 52.

The one covering portion 40 covers the one conductive layer 42. In the present embodiment, the one covering portion 40 is constituted by, for example, a layer of polyethylene (for example, ultra-low density polyethylene). The one covering portion 40 may be constituted by a layer of a synthetic resin other than the ultra-low density polyethylene. The synthetic resin mentioned here means a plastic. Examples of such a synthetic resin include polyethylene other than ultra-low density polyethylene and polyamide. The one covering portion 40 may be constituted by a layer of a material described below among materials other than the synthetic resin. The materials are elastomers, fibers, sizing agents, waxes, and metal oxides. The one covering portion 40 may be constituted by a layer using at least one of a synthetic resin, an elastomer, a fiber, a sizing agent, a wax, and a metal oxide as a material, and having a larger electrical resistance than the one conductive layer 42. In addition, the one covering portion 40 may be constituted by a film having a larger electrical resistance than the one conductive layer 42. The film mentioned here means a thinner film than the thinner one of the one conductive layer 42 and the other conductive layer 48. Examples of the material include synthetic resin, elastomer, fiber, sizing agent, wax, metal oxide, and ceramic particles. The thickness of the film mentioned here is, for example, less than 5 µm. The layer mentioned here means a layer thicker than the film mentioned here. The thickness of the layer is, for example, 5 µm or more, and may be, for example, 5 µm or more and 400 µm or less. The one covering portion 40 may be one in which the above-mentioned film and the above-mentioned layer overlap. The material constituting the one covering portion 40 is preferably polyethylene.

The one conductive layer 42 sandwiches the one insulating layer 44 and the other insulating layer 46 together with the other conductive layer 48. The electrical resistance of the one conductive layer 42 is smaller than the electrical resistance of the one insulating layer 44. The electrical resistance of the one conductive layer 42 is more preferably smaller than the electrical resistance of magnesium. The electrical resistance of the one conductive layer 42 is more preferably equal to or less than the electrical resistance of aluminum. Examples of the material of the one conductive layer 42 include metals (for example, aluminum, copper, silver, gold, and alloys thereof) and conductive synthetic resins. Examples of the conductive synthetic resin include PEDOT PSS (polythiophene), ITO (Indium Tin Oxide) thin film, metal mesh, carbon nanotube, and the like. Another example of the conductive synthetic resin is a synthetic resin into which a conductive substance is kneaded. Examples of the conductive substance in this case include graphite and metal. Needless to say, the one conductive layer 42 may be a hard material such as a known acrylic plate or a soft material such as an adhesive. Preferably, the material of one conductive layer 42 is aluminum.

The one insulating layer 44 and the other insulating layer 46 are made of an insulator. These are stacked. In the present embodiment, these materials may be the same or different, and the one insulating layer 44 and the other insulating layer 46 may be present as one layer. Examples of these materials include polyvinyl acetate, polyethylene and ethylene-vinyl alcohol copolymer, and the material is preferably polyethylene.

The other conductive layer 48 sandwiches the one insulating layer 44 and the other insulating layer 46 together with the one conductive layer 42. The electrical resistance of the other conductive layer 48 is smaller than the electrical resistance of the other insulating layer 46. The electrical resistance of the other conductive layer 48 is more preferably smaller than the electrical resistance of magnesium. The electrical resistance of the other conductive layer 48 is more preferably equal to or less than the electrical resistance of aluminum. Examples of the material of the other conductive layer 48 include a metal (for example, aluminum, copper, silver, gold, an alloy thereof) and a conductive synthetic resin. Examples of the conductive synthetic resin include PEDOT PSS (polythiophene), ITO (Indium Tin Oxide) thin film, metal mesh, carbon nanotube, and the like. Another example of the conductive synthetic resin is a synthetic resin into which a conductive substance is kneaded. Examples of the conductive resin in this case include graphite and metal. Needless to say, the other conductive layer 48 may be a hard material such as a known acrylic plate or a soft material such as an adhesive. Preferably, the material of the other conductive layer 48 is aluminum. The materials of the conductive layers forming the pair (one conductive layer 42 and another conductive layer 48) may be the same or different.

The other covering portion 50 covers the other conductive layer 48. In the present embodiment, the material of the other covering portion 50 is the same as that of the one covering portion 40. In other words, a substance that can be a material of the one covering portion 40 can be a material of the other covering portion 50. Therefore, the detailed description will not be repeated here. In one composite material 30, the configuration of the one covering portion 40 and the configuration of the other covering portion 50 may be the same or different.

The short-circuit preventing portion 52 is disposed at an edge of the one covering portion 40, an edge of the one conductive layer 42, an edge of the one insulating layer 44, an edge of the other insulating layer 46, an edge of the other conductive layer 48, and an edge of the other covering portion 50 so as to straddle these edges. The short-circuit preventing portion 52 prevents a short circuit between the one conductive layer 42 and the other conductive layer 48. To prevent this, the electrical resistance of the short-circuit preventing portion 52 in the present embodiment is equal to or more than the electrical resistance of the one insulating layer 44 and the other insulating layer 46. Needless to say, the short-circuit preventing portion 52 may be integrated with any one of the one covering portion 40, the one conductive layer 42, the one insulating layer 44, the other insulating layer 46, the other conductive layer 48, and the other covering portion 50. The short-circuit preventing portion 52 may not be integrated with any of these. The material of the short-circuit preventing portion 52 is preferably polyester or polyethylene.

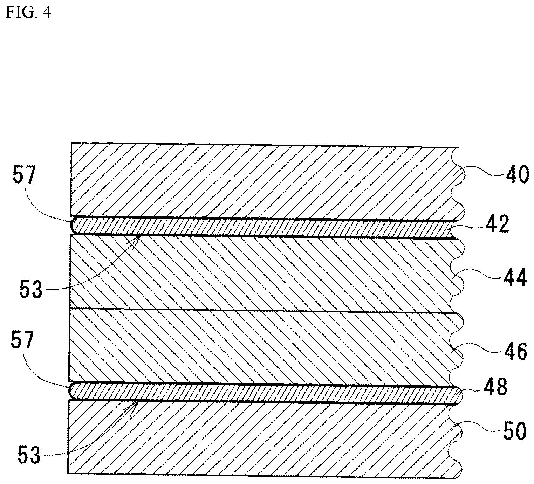

Regarding the short-circuit prevention measures when the conductive layer is made of metal, there is a method of providing a short-circuit preventing portion 53 described below, instead of the short-circuit preventing portion 52 straddling from the edge of the one covering portion 40 to the edge of the other covering portion 50 as described above. Fig. 4 shows a cross-sectional view of the composite material provided with the short-circuit preventing portion 53. The short-circuit preventing portion 53 is provided in each of the one conductive layer 42 and the other conductive layer 48. The short-circuit preventing portion 53 has an enclosing area 57. The enclosing area 57 encloses the outer edge of the conductive layer (one of the one conductive layer 42 and the other conductive layer 48). The short-circuit preventing portion 53 is formed by chemically reacting a metal member to be a conductive layer to irreversibly lose the conductivity of the surface layer of the conductive material. That is, the surface of a conductive material (in this case, a substance serving as a material of the conductive layer and the short-circuit preventing portion 53) is oxidized to give an oxide. Examples of the treating agent include oxidizing agents such as nitric acid, sulfuric acid, nicotinic acid, acetic acid, citric acid, and oxalic acid. The short-circuit portion is immersed in an aqueous solution in which an oxidizing agent is dissolved. It includes oxidation by an electrical method such as alumite. When the conductive material is made of aluminum, for example, a method of forming an oxidized portion by using high-temperature water, boiling water, or steam to insulate the material can be used. The portion where the short-circuit preventing portion 53 is formed is immersed in high-temperature water or boiling water, or steam is sprayed on the portion where the short-circuit preventing portion 53 is formed. In this method, water or steam is made alkaline with sodium bicarbonate, ammonia, alcohol amine or the like. By forming such a short-circuit preventing portion 53, the conductive layer and the outside of the enclosing area 57 are insulated. The conductive material subjected to these reaction treatments is used as at least one of the one conductive layer and the other conductive layer. The enclosing area 57 formed in this way is made of a substance having a larger electrical resistance than a portion not affected by the chemical treatment. The substance having a large electrical resistance is a compound of a substance different from a compound constituent and the compound constituent. The "compound constituent" is any of the components of the conductive layer.

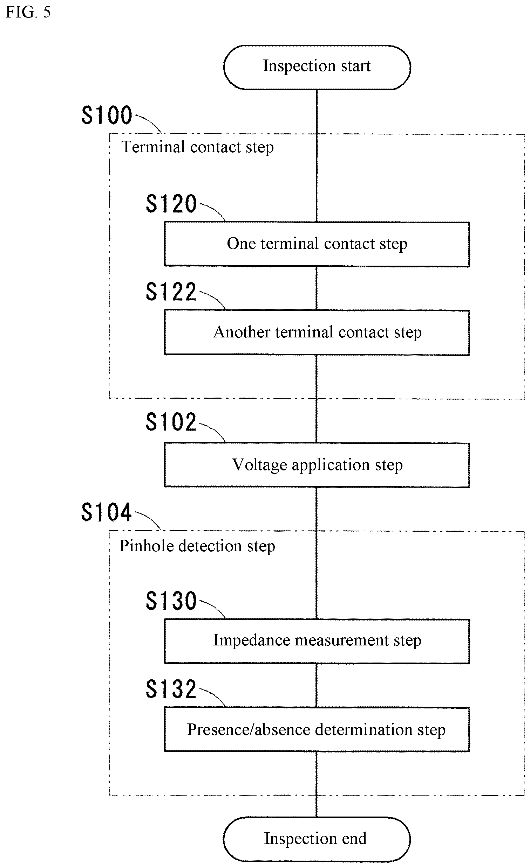

Fig. 5 is a flowchart showing the steps included in an inspection method of the composite material 30 according to the present embodiment. The inspection method according to the present embodiment includes a terminal contact step S100, a voltage application step S102, and a pinhole detection step S104. Note that, in the case of the present embodiment, these steps are performed for each composite material 30 constituting the packaging container 10. As described above, the medicine storage space forming portion 16 of the packaging container 10 according to the present embodiment has two first parts 20 and two second parts 22. Therefore, the inspection method of the composite material 30 according to the present embodiment is performed for each of the two first parts 20 and each of the two second parts 22. Since the inspection is performed for each composite material 30, the inspection method of the composite material 30 according to the present embodiment can detect the presence or absence of a pinhole in the packaging container 10 formed of these composite materials 30. Therefore, the inspection method of the composite material 30 according to the present embodiment can detect the presence or absence of the pinhole regardless of the presence or absence and the nature of the contents of the packaging container 10.

The terminal contact step S100 is a step of bringing a pair of terminals 70 (for applying a voltage) described later into electrical contact with the pair of conductive layers (one conductive layer 42 and another conductive layer 48) of the composite material 30 described above.

The voltage application step S 102 is a step of applying a voltage between the above-described pair of conductive layers (one conductive layer 42 and another conductive layer 48) via a pair of terminals 70 (for applying a voltage) described later.

The pinhole detection step S104 is a step of detecting the presence or absence of a pinhole in the composite material 30 according to whether or not the result of applying the voltage in the voltage application step S102 satisfies a predetermined requirement.

In the present embodiment, the above-described terminal contact step S100 includes one terminal contact step S120 and another terminal contact step S122. In the present embodiment, the one terminal contact step S120 is a step of bringing a terminal 70 described later into electrical contact with the one conductive layer 42 of the composite material 30 described above. The other terminal contact step S122 is a step of bringing a terminal 70 (which is different from the one that contacts the one conductive layer 42) described later into electrical contact with the other conductive layer 48 of the composite material 30 described above.

In the present embodiment, the above-described pinhole detection step S104 includes an impedance measurement step S130 and a presence/absence determination step S132. In the present embodiment, the impedance measurement step S130 is a step of measuring the impedance of the insulating layers (one insulating layer 44 and another insulating layer 46) with respect to the voltage applied in the voltage application step S102. The presence/absence determination step S132 is a step of determining the presence or absence of a pinhole according to whether or not the impedance measured in the impedance measurement step S130 is below a threshold.

An example of a material of the terminal 70 includes a simple substance or powder of a conductive metal such as iron, stainless steel, aluminum, and copper, or a metal oxide. In addition, there are carbon, conductive resin, and the like. As a method of forming a microneedle, there is a method of creating a mother die based on the microneedle prototype and pressing the needle portion, or flowing a powder or liquid conductive material through the needle mold into the mother die and solidifying to obtain a terminal.

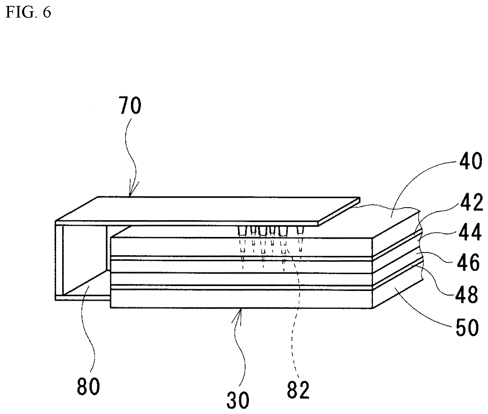

Fig. 6 is a conceptual diagram showing the structure of the terminal 70 according to the present embodiment and its use state. In Fig. 6, the short-circuit preventing portion 52 of the composite material 30 is not shown. In the present embodiment, the terminal 70 includes a gripper 80, a projection body 82, and an electrode (not shown). The gripper 80 grips the composite material 30. The projection body 82 projects from the inner peripheral surface of the base portion of the gripper 80. The electrode is connected to a power supply (not shown). In the present embodiment, the projection height of the projection body 82 is not particularly limited. Its height is, for example, not less than 10 µm and not more than 130 µm. However, the height is a height that penetrates one of the one conductive layer 42 and the other conductive layer 48 when piercing one surface of the composite material 30 but does not reach the other. In the present embodiment, the tip of the projection body 82 is sharp. Thus, when the gripper 80 grips the composite material 30, the tip of the projection body 82 comes into electrical contact with one of the one conductive layer 42 and the other conductive layer 48. At this time, the tip of the projection body 82 does not contact the other of the one conductive layer 42 and the other conductive layer 48. That is, it is electrically insulated from the other. As a result, it is possible to bring one of the pair of terminals 70 into electrical contact with one of the pair of the one conductive layer 42 and the other conductive layer 48 (electrically insulated from the other), and to bring the other of the pair of terminals 70 into electrical contact with the other of the pair of the one conductive layer 42 and the other conductive layer 48 (electrically insulated from one). Moreover, the projection body 82 of the terminal 70 comes into uniform contact with one of the one conductive layer 42 and the other conductive layer 48.

In the voltage application step S102, there is no particular limitation on how to apply a voltage between the above-described pair of conductive layers (one conductive layer 42 and another conductive layer 48) via the pair of terminals 70. The voltage may be DC or AC. The magnitude of the voltage is not particularly limited. For example, the voltage may range from 0.6 kV to 1.5 kV. The time during which the voltage is applied is not particularly limited.

In the pinhole detection step S104, the contents of the above-described predetermined requirement for detecting the presence or absence of a pinhole are not particularly limited. For example, the requirement may be whether the magnitude of the leakage current flowing between the pair of terminals 70 has exceeded a predetermined threshold. In this case, if the magnitude of the leakage current exceeds a predetermined threshold (for example, 0.6 µA), it is detected that there is a pinhole.

### [Description of effects of composite material, packaging container, and inspection method according to present embodiment]

In the case of the present embodiment, if a pinhole is present in the composite material 30, the leakage current and the like when a voltage is applied to the pair of conductive layers are significantly different from the case where there is no pinhole. Since the leakage current and the like are significantly different, whether or not the composite material 30 according to the present embodiment has a pinhole can be detected by application of the voltage, measurement of the leakage current associated therewith, and determination of other predetermined requirements. In some cases, an inspection relating to the presence or absence of a pinhole can be performed at one point of the composite material 30. A complicated process such as bringing the electrode into contact with the entire surface of the composite material is unnecessary. The application of the voltage, the measurement of the leakage current associated therewith, and the determination of other predetermined requirements have less restrictions on the place where the inspection for the presence or absence of a pinhole is performed as compared with the detection of a pinhole by other methods. Since there is little restriction on the place where the inspection for the presence or absence of a pinhole is performed, the degree of freedom in the place where the inspection is performed can be increased. Since there is a high degree of freedom in the place where the inspection for the presence or absence of a pinhole is performed, for example, even for large-scale (large capacity) packaging bags with a capacity of 20 cubic centimeters or more and 3000 cubic centimeters or less, for example, to store pharmaceuticals at the time of manufacture, inspection for the presence or absence of a pinhole can be easily performed.

Conversely, it is conceivable to lengthen the inspection time. For example, when a medicine or a sample is stored and managed in a packaging container for a long time, the soundness of the packaging container may be constantly monitored during the management time. In that case, it is conceivable to always measure the leakage with, for example, a low-voltage weak current depending on the stored contents, and it is possible to perform inspection by using this composite material, packaging container, terminal, and inspection method.

In addition, since the presence or absence of a pinhole is detected by measurement of the leakage current and determination of other predetermined requirements, the inspection time is very short.

In addition, if a voltage can be applied between the one conductive layer 42 and the other conductive layer 48, the presence or absence of a pinhole can be inspected before, during, and after the use of the packaging container 10 and other products using the composite material 30. The presence or absence of a pinhole can be inspected regardless of the form of the packaging container 10 and other products (for example, whether the product is folded or expanded). Whether or not the packaging container 10 using the composite material 30 stores something, the presence or absence of a pinhole in the composite material 30 can be inspected. The presence or absence of a pinhole in the composite material 30 can be inspected whether or not what is stored in the packaging container 10 is conductive.

Also, the presence or absence of a smaller pinhole can be inspected compared with the pressure decay method.

### [Description of other embodiments]

The embodiment disclosed this time is illustrative in all respects. The scope of the present invention is not limited based on the above-described embodiment, and various design changes may be made without departing from the gist of the present invention.

For example, the packaging container according to the present invention is not limited to those described above. Examples of packaging containers according to the present invention include regenerative medicine containers and medical drip bags. The form of the packaging container according to the present invention is not particularly limited. Examples of such forms include trays, cubes, cuboids, tubes, and spheres. The packaging container according to the present invention may have a cube shape with rounded corners and a rectangular parallelepiped shape with rounded corners. The surface of the packaging container according to the present invention may be subjected to any surface treatment. Examples of the surface treatment include a surface treatment for suppressing powder adhesion.

The use of the packaging container according to the present invention is not particularly limited. Examples of uses of the packaging container according to the present invention other than medicine storage include food storage and chemical substance storage.

The specific form and configuration of the composite material 30 are not limited to those described above. For example, the specific form and configuration of the short-circuit preventing portion 52 are not particularly limited. The short-circuit preventing portion 52 may be any as long as it can insulate the one conductive layer 42 and the other conductive layer 48 from each other. In the present invention, the insulating layer of the composite material is not limited to the one composed of two layers of the one insulating layer 44 and the other insulating layer 46. The insulating layer sandwiched between the one conductive layer 42 and the other conductive layer 48 may be composed of one layer, or may be composed of three or more layers. Each layer constituting the composite material according to the present invention may have a different function in addition to the functions described above. Examples of such a function include a function of suppressing gas transmission and a function of blocking ultraviolet light. Each layer constituting the composite material according to the present invention may be composed of a plurality of layers. For example, similarly to the above-described composite material 30 composed of two layers of the one insulating layer 44 and the other insulating layer 46, at least one of the one covering portion 40 and the other covering portion 50 may be composed of a plurality of layers.

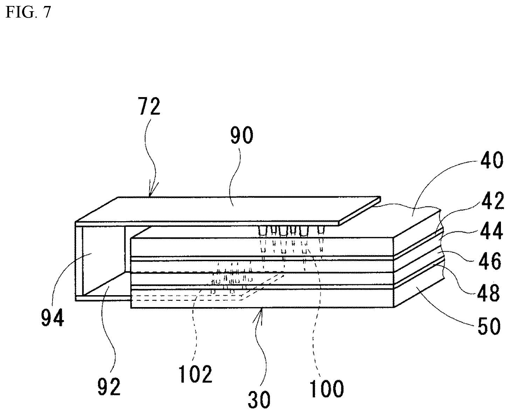

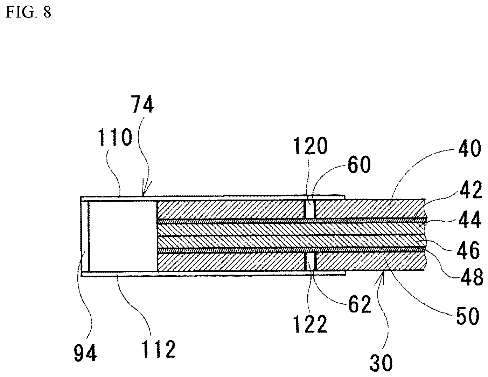

In the other terminal contact step S122, the other of the pair of terminals, which is in contact with one of the pair of conductive layers via the pair of conductive layers (the pair of the one conductive layer 42 and the other conductive layer 48) and the insulating layers (the one insulating layer 44 and the other insulating layer 46), may be in electrical contact with the other of the pair of conductive layers such that the other of the pair of terminals opposes one of the pair of terminals. The specific means for that is not particularly limited. For example, a pair of conductive layers may be exposed in advance, and a pair of terminals may each be in contact with those conductive layers. Fig. 7 is a conceptual diagram showing a structure of a pair of terminals 72 according to a second embodiment of the present invention and its use state. In Fig. 7, the short-circuit preventing portion 52 of the composite material 30 is not shown. In this embodiment, the pair of terminals 72 includes a pair of terminals 90 and 92, an insulator 94, and a pair of electrodes (not shown). One of the pair of terminals 90 and 92 has a projection body 100. The projection body 100 projects from the inner peripheral surface of the base of one of the pair of terminals 90 and 92. The other of the pair of terminals 90 and 92 has a projection body 102. The projection body 102 projects from the inner peripheral surface of the base of the other of the pair of terminals 90 and 92. Also in this embodiment, the tip of the projection body 100, 102 is pointed. Also in this embodiment, the projection height of the projection body 100, 102 is not particularly limited. The number and distribution of the projection bodies 100 and 102 are not particularly limited. One projection body 100, 102 may project, or many projection bodies 100, 102 may project. When many projection bodies 100 and 102 project, the distribution is not particularly limited. As a result, the projection bodies 100 and 102 may be distributed in a microneedle shape. However, the projection height of the projection body 100, 102 is a height that penetrates one of the one conductive layer 42 and the other conductive layer 48 but does not reach the other when pierced on one surface of the composite material 30. The pair of terminals 90 and 92 is fixed to the insulator 94 such that they oppose each other. In one of the pair of electrodes, one of the pair of terminals 90 and 92 is connected to a power supply (not shown). In the other of the pair of electrodes, the other of the pair of terminals 90 and 92 is connected to a power supply (not shown). Fig. 8 is a conceptual diagram showing a structure of a pair of terminals 74 according to a third embodiment of the present invention and its use state. In Fig. 8, the short-circuit preventing portion 52 of the composite material 30 is not shown. In this embodiment, the pair of terminals 74 includes a pair of terminals 110, 112, an insulator 94, and a pair of electrodes (not shown). One of the pair of terminals 110 and 112 has a projection body 120. The projection body 120 projects from a base portion of the inner peripheral surface of one of the pair of terminals 110 and 112. The other of the pair of terminals 110 and 112 has a projection body 122. The projection body 122 projects from a base portion of the inner peripheral surface of the other of the pair of terminals 110 and 112. In this embodiment, the shape of the projection body 120, 122 is columnar. As a result, the tip of the projection body 120, 122 is flat. In this embodiment, the projection body 120, 122 comes into contact with the one conductive layer 42 or the other conductive layer 48 by being inserted into a hole 60, 62 formed in the composite material 30 in advance. In this embodiment, the projection height of the projection body 120, 122 may be a height that can be in contact with the one conductive layer 42 or the other conductive layer 48 when inserted into the hole 60, 62 formed in the composite material 30. The number and distribution of the projection bodies 120 and 122 are not particularly limited. One projection body 120, 122 may project, or many projection bodies 120, 122 may project. When many projection bodies 100 and 102 project, the distribution is not particularly limited. When many projection bodies 100, 102 project, they may be inserted into one hole 60, 62 or may be inserted into holes 60, 62 different from each other. Needless to say, neither the pair of terminals 90 and 92 nor the pair of terminals 110 and 112 need be fixed to the insulator 94. For example, they may pinch the composite material 30 tightly with leverage, such as an alligator clip.

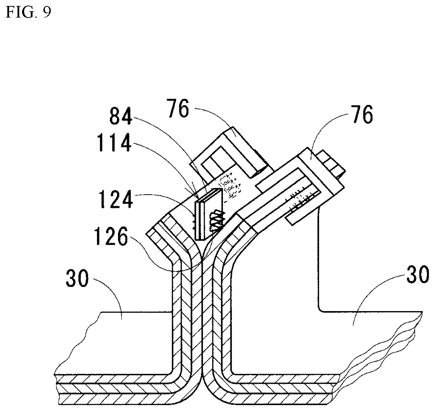

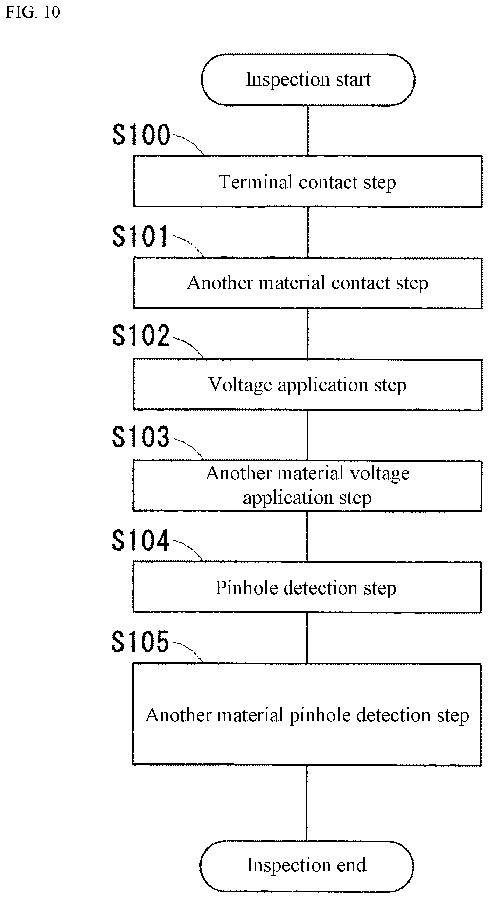

The inspection method of the composite material 30 according to the present invention may be performed on a plurality of composite materials 30 at the same time. Fig. 9 is a conceptual diagram showing a situation in which the inspection method of a composite material 30 according to the fourth embodiment of the present invention is being performed on two composite materials 30 at the same time. Fig. 10 is a flowchart illustrating an example of steps when the composite material inspection method according to the fourth embodiment of the present invention is performed on two composite materials 30. An example of steps when the composite material inspection method according to the fourth embodiment of the present invention is performed on two composite materials 30 will be described with reference to Figs. 9 and 10.

In this case, two terminals 76 and a double-sided terminal 114 are used. One of the two terminals 76 is used for inspecting one of the two composite materials 30. The other of the two terminals 76 is used for inspecting the other of the two composite materials 30. The configuration itself of these terminals 76 is the same as that of the terminal 70 described above. The size of the member constituting these terminals 76 (member corresponding to the gripper 80 of the terminal 70 described above) is different from that of the terminal 70 described above.

The double-sided terminal 114 is a type of terminal used in the composite material inspection method according to the present invention. The double-sided terminal 114 has a base 84, a conductor-made projection body 124, a conductor-made backside projection body 126, and two electrodes (not shown). The base 84 has two flat plates made of a conductor and an insulator sandwiched between them. The insulator insulates two flat plates made of a conductor. The projection body 124 projects from a surface of one of the flat plates. The heights of the tips of the projection bodies 124 are uniform. As a result, the tips of the projection bodies 124 are arranged along a predetermined plane from the base 84. The backside projection body 126 projects from a surface of the other of the two flat plates of the base 84. As a result, the backside projection body 126 projects from an area corresponding to the back side of the base 84 when viewed from an area where the projection body 124 projects. The heights of the tips of the backside projection bodies 126 are also uniform. As a result, the tips of the backside projection bodies 126 project from the base 84 so as to extend along a predetermined plane described below. The plane is a plane parallel to the plane along which the projection body 124 extends. The electrodes are connected to the two flat plates of the base 84, respectively. For example, two electric wires are connected to the electrodes. These electric wires are connected to a power supply (not shown). One of the electric wires is used for inspecting one of the two composite materials 30. The other of the electric wires is used for inspecting the other of the two composite materials 30. Note that the base 84 may be composed of a single flat plate made of a conductor instead of two flat plates made of a conductor and an insulator sandwiched between them. In this case, the two electrodes described above are connected to the two flat plates. In addition, the base 84 may have a portion that is suitable for sandwiching the composite material 30, such as the gripper 80 described above.

In this case, the composite material inspection method according to the present invention includes a terminal contact step S100, another material contact step S101, a voltage application step S102, another material voltage application step S103, a pinhole detection step S104, and another material pinhole detection step S105.

In the other material contact step S101, the double-sided terminal 114 (which corresponds to one of the pair of terminals in the terminal contact step S100) makes electrical contact with one of the pair of conductive layers of the other of the two composite materials 30 in addition to one of the pair of conductive layers of one of the composite materials 30. As a result, the double-sided terminal 114 also serves as one of the pair of terminals in the terminal contact step S100. One of the two terminals 76 (the other of the terminals 76 corresponds to the other of the pair of terminals in the terminal contact step S100) makes electrical contact with the other of the pair of conductive layers of the other of the two composite materials 30.

In the other material voltage application step S103, a voltage is applied between the pair of conductive layers of the other of the two composite materials 30 via the double-sided terminal 114 and one of the two terminals 76.

In the other material pinhole detection step S105, the presence or absence of a pinhole in the other of the two composite materials 30 is detected according to whether or not the result of applying the voltage in the other material voltage application step S103 satisfies a predetermined requirement. The predetermined requirement mentioned here is not particularly limited. For example, the predetermined requirement is that the impedance of the insulating layer of the composite material 30 be below a threshold.

Thereby, the projection bodies 124 simultaneously contact the conductive layers inside the container with the two composite materials 30 facing up and down, so that the application can be performed in parallel. The number of wirings required for detection can be reduced. Instead of the two terminals 76, a pair of terminals similar to those shown in Fig. 7 (provided that the interval between the terminals 90 and 92 is wide enough to sandwich the two composite materials 30) may be used. For example, if this pair of terminals 72 is brought into contact with the conductive layer on the outside of the container of the two composite materials 30 as well, the two composite materials 30 can be measured simultaneously in parallel, and the number of wirings becomes four.

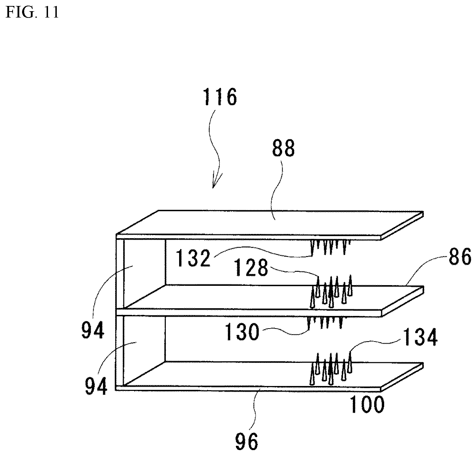

Note that, as described above, when the inspection method of the composite material 30 according to the present invention is performed on two composite materials 30 at the same time, a simultaneous measurement terminal 116 described below may be used instead of the two terminals 76 and the double-sided terminal 114. Fig. 11 is a conceptual diagram showing a structure of a simultaneous measurement terminal 116 according to a first modification of the fourth embodiment of the present invention. The simultaneous measurement terminal 116 is a type of terminal used in the composite material inspection method according to the present invention. The simultaneous measurement terminal 116 includes a base 86, a plurality of projection bodies 128 made of a conductor, a plurality of backside projection bodies 130 made of a conductor, an opposing base 88 made of a conductor, a plurality of opposing projection bodies 132 made of a conductor, a backside opposing base 96 made of a conductor, a plurality of backside opposing projection bodies 134 made of a conductor, two insulators 94, and four electrodes (not shown).

The base 86 is a flat plate made of a conductor. The projection bodies 128 project from the base 86. The tips thereof are arranged along a predetermined plane. The backside projection bodies 130 project from an area corresponding to the back side of the base 86 when viewed from an area where the projection bodies 128 project. The tips thereof are arranged along a plane parallel to the plane along which the projection bodies 128 extend. The opposing base 88 is disposed so as to oppose an area of the base 86 where the projection bodies 128 project. The opposing projection bodies 132 project from the opposing base 88 toward an area of the base 86 where the projection bodies 128 project. The tips thereof are arranged along a plane parallel to the plane along which the projection bodies 128 extend. The backside opposing base 96 is disposed so as to oppose an area corresponding to the back side of the base 86 when viewed from an area where the projection bodies 128 project. The backside opposing projection bodies 134 project from the backside opposing base 96 toward an area described below. The area is an area corresponding to the back side of the base 86 when viewed from the area where the projection bodies 128 project. The tips of the backside opposing projection bodies 134 are arranged along a plane parallel to the plane along which the projection bodies 128 extend. Two of the four electrodes are connected to two conductor-made plates of the base 86. One of the four electrodes is connected to the opposing base 88. The remaining one of the four electrodes is connected to the backside opposing base 96.

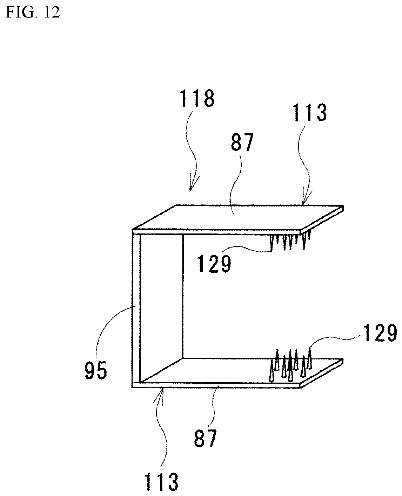

Further, as described above, when the inspection method of the composite material 30 according to the present invention is performed on two composite materials 30 at the same time, a pair of terminals 118 described below may be used instead of the two terminals 76. Fig. 12 is a conceptual diagram showing a structure of a pair of terminals 118 according to a second modification of the fourth embodiment of the present invention. The pair of terminals 118 includes a pair of terminals 113, 113, an insulator 95, and two electrodes (not shown). The pair of terminals 118 is used in the composite material inspection method according to the present invention. Such a terminal connected by an insulator can also be called a terminal connected body.

The terminals 113 and 113 included in the pair of terminals 118 are used for inspecting composite materials 30 different from each other. The insulator 95 connects these terminals 113 and 113. The interval between these terminals 113 and 113 is wide enough to sandwich the two composite materials 30 therebetween. One of the two electrodes is connected to one of these terminals 113 and 113. The other of the two electrodes is connected to the other of these terminals 113 and 113. The terminal 113 has a base 87 made of a conductor and a plurality of projection bodies 129 made of a conductor. The base 87 is a flat plate made of a conductor. The projection bodies 129 project from the base 87. The tips thereof are arranged along a predetermined plane. These terminals 113 and 113 are arranged such that the respective projection bodies 129 and 129 oppose each other.

Further, as described above, when the inspection method of the composite material 30 according to the present invention is simultaneously performed on two composite materials 30, two terminals described below may be used instead of the double-sided terminal 114 and the two terminals 76 described above. The first of the two terminals is a terminal having the same structure as the double-sided terminal 114 shown in Fig. 9 except that the base is composed of a single flat plate made of a conductor and that the number of electrodes is one. In this case, the electrode is connected to the plate made of a conductor. Since the base is composed of one flat plate made of a conductor, the projection body 124 and the backside projection body 126 are short-circuited. This terminal contacts the two composite materials 30 in the same manner as the double-sided terminal 114. The second of the two terminals is a terminal having the same structure as the pair of terminals 118 shown in Fig. 12 except that a conductor-made member is provided instead of the insulator 95 and that the number of electrodes is one. In this case, the terminals 113 and 113 are short-circuited by the conductor-made member. The electrode is connected to one of the terminals 113 and 113. The terminal contacts the conductive layers of the two composite materials 30 so as to sandwich the two composite materials 30. Thereby, the terminal contact step S100 and the other material contact step S101 can be performed simultaneously. The voltage application step S102 and the other material voltage application step S103 can be performed simultaneously. The pinhole detection step S104 and the other material pinhole detection step S105 can be performed simultaneously. As a result, as the number of electrodes provided on these two terminals decreases, the number of electric wires connected to those electrodes also decreases.

The specific contents of the terminal contact step S100 are not limited to those described above. That is, the terminal contact step S100 is not limited to the one including the one terminal contact step S120 and the other terminal contact step S122.

The specific contents of the pinhole detection step S104 are also not limited to those described above. The pinhole detection step S104 may be a step of detecting the presence or absence of a pinhole in the composite material 30 according to whether or not the result of applying the voltage in the voltage application step S102 satisfies a predetermined requirement. The predetermined requirement mentioned here refers to a predetermined requirement regarding electrical properties of the composite material 30. Examples of the predetermined requirement include, in addition to whether the impedance drops below a threshold, whether the insulation resistance exceeds a threshold, whether the dielectric loss tangent exceeds a threshold, whether the leakage current exceeds a threshold, and whether the capacitance described below exceeds a threshold. The capacitance is a capacitance between the one conductive layer 42 and the other conductive layer 48. As described above, they sandwich the one insulating layer 44 and the other insulating layer 46. If the composite material 30 according to the present embodiment has a pinhole, the electrical properties (for example, leakage current and capacitance) of the composite material 30 should be different from those without the pinhole. Since the electrical properties should be different, if there is a pinhole in the composite material 30 according to the present embodiment, the result of applying the voltage in the voltage application step S102 should be different from the case without the pinhole. Since the result of applying the voltage is different, the above-described requirements are set in advance according to the difference in the result, so that the presence or absence of a pinhole can be detected according to the result of applying the voltage in the voltage application step S102.

### [Description of Example]

### <Example 1>

The operator formed a composite material 30 described below. The composite material 30 included one covering portion 40, one conductive layer 42, one insulating layer 44, another insulating layer 46, another conductive layer 48, another covering portion 50, and a short-circuit preventing portion 52. The one covering portion 40 in this example had a 15-µm-thick polyethylene layer opposing the one conductive layer 42, and a 15-µm-thick nylon (registered trademark) layer overlapping the polyethylene layer. The one conductive layer 42 in this example was an aluminum layer having a thickness of 7 µm. The one insulating layer 44 in this example had a 15-µm-thick polyethylene layer opposing the one conductive layer 42 and a 70-µm-thick polyethylene layer overlapping the polyethylene layer. The other insulating layer 46 in this example had a 70-µm-thick polyethylene layer opposing the one insulating layer 44 and a 15-µm-thick polyethylene layer overlapping the polyethylene layer. The other conductive layer 48 was a 7-µm-thick aluminum layer opposing the 70-µm-thick polyethylene layer. The other covering portion 50 in this example had a 15-µm-thick polyethylene layer opposing the other conductive layer 48 and a 15-µm-thick nylon (registered trademark) layer overlapping the polyethylene layer. The one conductive layer 42, the one insulating layer 44, the other insulating layer 46, and the other conductive layer 48 had a rectangular shape of 160 mm × 240 mm. The short-circuit preventing portion 52 had a portion where the ends of the one covering portion 40 and the one insulating layer 44 were closed, and a portion where the ends of the other insulating layer 46 and the other covering portion 50 were closed. All of these portions to be closed were made of polyester. Once the composite material 30 was formed, the operator filed a part of the front of the composite material 30. As a result, the one conductive layer 42 was exposed in the filed part. Next, the operator filed a part of the back of the composite material 30. As a result, the other conductive layer 48 was exposed in the filed part. The operator similarly created seven identical samples. Sample numbers from "1" to "7" were set for the created samples.

When the samples were prepared, the operator connected the one conductive layer 42 and the other conductive layer 48 of any one of the samples to Insulation/Withstand Voltage Tester WT-8773 manufactured by Hioki Electric Co., Ltd. using electric wires. When they were connected to the Insulation/Withstand Voltage Tester, the operator applied a DC voltage of 1.5 kV between the one conductive layer 42 and the other conductive layer 48 by the Insulation/Withstand Voltage Tester. When the DC voltage was applied, the operator measured the leakage current (the current flowing between the one conductive layer 42 and the other conductive layer 48) with the Insulation/Withstand Voltage Tester. The measurement time was 10 seconds. If dielectric breakdown occurs between the one conductive layer 42 and the other conductive layer 48 before the DC voltage of 1.5 kV is applied (that is, when an arc is generated), in addition to the leakage current, the applied voltage when the dielectric breakdown occurred was also measured. The threshold of the leakage current was 0.6 µA.

In addition, the operator connected the one conductive layer 42 and the other conductive layer 48 of one of the samples in which the application of the DC voltage has been completed and the dielectric breakdown has not occurred to the Insulation/Withstand Voltage Tester WT-8773 manufactured by Hioki Electric Co., Ltd. using electric wires. When the sample was connected to the Insulation/Withstand Voltage Tester, the operator applied an AC voltage of 1.5 kV between the one conductive layer 42 and the other conductive layer 48 by the Insulation/Withstand Voltage Tester. When the AC voltage was applied, the operator measured a leakage current (a current flowing between the one conductive layer 42 and the other conductive layer 48) by using the Insulation/Withstand Voltage Tester. The measurement time was 10 seconds. If the dielectric breakdown has occurred between the one conductive layer 42 and the other conductive layer 48 before the AC voltage of 1.5 kV was applied (that is, when an arc was generated), the applied voltage when the dielectric breakdown has occurred was also measured.

When the application of the DC voltage and the application of the AC voltage were completed, the operator pierced the needle to the sample to which those voltages were applied. This formed a hole in the sample. When the hole was formed, the operator measured the leakage current in the same procedure as before the hole was formed. Hereinafter, the same measurement was performed also on other samples. Table 1 shows the measured values. In Table 1, "DC withstand voltage" indicates the maximum value of the DC voltage applied during measurement. "DC leakage current" indicates the maximum value of the leakage current during measurement. "AC withstand voltage" indicates the maximum value of the AC voltage applied during measurement. "DC withstand voltage (arc detection)" and "AC withstand voltage (arc detection)" indicate the applied voltage at the time of dielectric breakdown in a case where dielectric breakdown occurs during application of AC voltage.

**[Table 1]**

| Sample No. | Before pinhole processing | | | After pinhole processing (needle tip) | |
|---|---|---|---|---|---|
| | DC withstand voltage | DC leakage current | AC withstand voltage | DC withstand voltage (arc detection) | AC withstand voltage (arc detection) |
| 1 | 1.5 kv | 0.3 µA or less | 1.5 kv | 0.6 kv | 0.6 ∼ 0.7 kv |
| 2 | 1.5 kv | 0.3 µA οr less | 1.5 kv | 0.8 kv | 0.9 ∼ 1.0 kv |
| 3 | 1.5 kv | 0.3 µA or less | 1.5 kv | 0.8kv | 0.8 ∼ 0.9 kv |
| 4 | 1.5 kv | 0.3 µA or less | 1.5 kv | 1.0 kv | 0 6 ∼ 0.7 kv |
| 5 | 1.5 kv | 0.3 µA or less | 1.5 kv | 1.0 kv | 0.7 ∼ 0.8 kv |
| 6 | 1.5 kv | 0.3 µA or less | 1.5 kv | 0.9 kv | 0.5 ∼ 0.6 kv |
| 7 | 1.5 kv | 0.3 µA or less | 1.5 kv | 1.2 kv | 0.5 ∼ 0.6 kv |

As is evident from Table 1, after the sample was pierced with the needle, the voltage at the time when the arc occurred is significantly lower.

### DESCRIPTION OF REFERENCE SIGNS

10: Packaging container
16: Medicine storage space forming portion
20: First part
22: Second part
30: Composite material
40: One covering portion
42: One conductive layer
44: One insulating layer
46: Another insulating layer
48: Another conductive layer
50: Another covering portion
52: Short-circuit preventing portion
60, 62: Hole
70, 76, 90, 92, 110, 112, 113: Terminal
72, 74, 118: Pair of terminals
80: Gripper
82, 100, 102, 120, 122, 124, 128, 129: Projection body
84, 86, 87: Base
88: Opposing base
94, 95: Insulator
96: Backside opposing base
114: Double-sided terminal
116: Simultaneous measurement terminal
126, 130: Backside projection body
132: Opposing projection body
134: Backside opposing projection body
300: Trolley

## Claims

1. A composite material, comprising:
an insulating layer using an insulator as a material;
a pair of conductive layers sandwiching the insulating layer and each having a smaller electrical resistance than the insulator;
one covering portion having at least one of a film having a higher electrical resistance than the conductive layer, and a layer using at least one of a synthetic resin, an elastomer, a fiber, a sizing agent, a wax, and a metal oxide as a material and having a larger electrical resistance than the conductive layer, the one covering portion covering one of the pair of conductive layers; and
another covering portion having at least one of a film having a higher electrical resistance than the conductive layer, and a layer using at least one of a synthetic resin, an elastomer, a fiber, a sizing agent, a wax, and a metal oxide as a material and having a larger electrical resistance than the conductive layer, the other covering portion covering the other of the pair of conductive layers.

2. The composite material according to claim 1, further comprising a short-circuit preventing portion disposed at an edge of the pair of conductive layers and preventing a short circuit in the pair of conductive layers.

3. The composite material according to claim 2, wherein the short-circuit preventing portion has an enclosing area that encloses an outer edge of the conductive layer and has a larger electrical resistance than the conductive layer.

4. The composite material according to claim 3, wherein the enclosing area contains a substance that is a compound of a compound constituent that is any of components of the conductive layer and a substance different from the compound constituent, and has a larger electrical resistance than the conductive layer.

5. A packaging container using a composite material according to claim 1 as a material.

6. The packaging container according to claim 5, comprising a medicine storage space forming portion that uses the composite material as a material and forms a space for storing a medicine.

7. A terminal, comprising:
a base; and
a plurality of projection bodies projecting from the base, wherein
tips of the plurality of projection bodies are arranged along a predetermined plane.

8. The terminal according to claim 7, further comprising:
an opposing base disposed to oppose the base; and
a plurality of opposing projection bodies projecting from the opposing base toward the base, wherein
tips of the plurality of opposing projection bodies are arranged along a plane parallel to the predetermined plane.

9. The terminal according to claim 7, further comprising,
a plurality of backside projection bodies projecting from an area corresponding to a back side when viewed from an area where the plurality of projection bodies protrude in the base, wherein
tips of the plurality of backside projection bodies are arranged along a plane different from the predetermined plane.

10. The terminal according to claim 9, further comprising:
an opposing base disposed to oppose an area where the plurality of projection bodies project in the base;
a plurality of opposing projection bodies projecting from the opposing base toward an area where the plurality of projection bodies project in the base;
a backside opposing base disposed to oppose an area corresponding to a back side when viewed from an area where the plurality of projection bodies project in the base; and
a plurality of backside opposing projection bodies projecting from the backside opposing base toward an area corresponding to a back side when viewed from an area where the plurality of projection bodies project in the base.

11. A composite material inspection method, comprising:
a terminal contact step of bringing one of a pair of terminals for applying a voltage into electrical contact with one of the pair of conductive layers of a composite material, and bringing the other of the pair of terminals into electrical contact with the other of the pair of conductive layers, the composite material including an insulating layer using an insulator as a material, a pair of conductive layers sandwiching the insulating layer and each having a smaller electrical resistance than the insulator, one covering portion having at least one of a film having a higher electrical resistance than the conductive layer, and a layer using at least one of a synthetic resin, an elastomer, a fiber, a sizing agent, a wax, and a metal oxide as a material and having a larger electrical resistance than the conductive layer, the one covering portion covering one of the pair of conductive layers, and another covering portion having at least one of a film having a higher electrical resistance than the conductive layer, and a layer using at least one of a synthetic resin, an elastomer, a fiber, a sizing agent, a wax, and a metal oxide as a material and having a larger electrical resistance than the conductive layer, the other covering portion covering the other of the pair of conductive layers;
a voltage application step of applying a voltage between the pair of conductive layers through the pair of terminals; and
a pinhole detection step of detecting the presence or absence of a pinhole in the composite material according to whether or not a result of applying the voltage in the voltage application step satisfies a predetermined requirement.

12. The composite material inspection method according to claim 11, wherein
the terminal contact step includes:
one terminal contact step of bringing one of the pair of terminals into electrical contact with one of the pair of conductive layers in a state of being electrically insulated from the other of the pair of conductive layers; and
another terminal contact step of bringing the other of the pair of terminals into electrical contact with the other of the pair of conductive layers in a state of being electrically insulated from one of the pair of conductive layers.

13. The composite material inspection method according to claim 12, wherein the other terminal contact step includes a step of bringing the other of the pair of terminals into electrical contact with the other of the pair of conductive layers such that the other of the pair of terminals opposes one of the pair of terminals via the pair of conductive layers and the insulating layer.

14. The composite material inspection method according to any one of claims 11 to 13, wherein the terminal has a plurality of projection bodies arranged to uniformly contact the conductive layer.

15. The composite material inspection method according to claim 11, wherein
the pinhole detection step includes:
an impedance measurement step of measuring an impedance of the insulating layer with respect to the voltage applied in the voltage application step; and
a presence/absence determination step of determining presence or absence of the pinhole according to whether or not the impedance measured in the impedance measurement step is below a threshold.

16. The composite material inspection method according to claim 11, comprising:
another material contact step of bringing a pair of terminals into electrical contact with the pair of conductive layers of another composite material having the same structure as the composite material;
another material voltage application step of applying a voltage to the pair of conductive layers of the other composite material; and
another material pinhole detection step of detecting presence or absence of a pinhole in the other composite material according to whether or not a result of applying the voltage in the other material voltage application step satisfies a predetermined requirement, wherein
one of the pair of terminals in the other material contact step is in electrical contact with one of the pair of conductive layers of the other composite material,
the other of the pair of terminals in the other material contact step is in electrical contact with the other of the pair of conductive layers of the other composite material,
the one of the pair of terminals in the other material contact step also serves as one of the pair of terminals in the terminal contact step,
the other of the pair of terminals in the other material contact step is a terminal different from the other of the pair of terminals in the terminal contact step, and
in the other material voltage application step, a voltage is applied to the pair of conductive layers via the pair of terminals in the other material contact step.
